# FASCICULE DE BREVET EUROPEEN

(11) **EP 2 413 108 B1**
(45) Date de publication et mention de la délivrance du brevet: **08.05.2013**
(21) Numéro de dépôt: 11175656.5
(22) Date de dépôt: 27.07.2011
(51) Int. Cl.: G01F 11/28

(54) **Dispositif de dosage**
Dosiervorrichtung
Metering device

(30) Priorité: 27.07.2010 FR 1056168
(43) Date de publication de la demande: 01.02.2012
(73) Titulaire: Pont Emballage, 94150 Rungis (FR)
(72) Inventeur: Seris, Georges, 75013 PARIS (FR); Catteau, Frédéric, 75006 PARIS (FR)
(74) Mandataire: Regimbeau

(56) Documents cités:
- EP-A1- 0 010 965
- EP-A2- 0 060 060
- DE-A1- 2 429 626
- DE-A1- 3 618 559

## Description

### DOMAINE DE L'INVENTION

L'invention concerne le domaine des dispositifs doseurs permettant de déverser une dose prédéterminée d'un produit liquide contenu dans un récipient.

### ETAT DE LA TECHNIQUE

Le document US 4,106,673 décrit un dispositif pour mesurer et distribuer un produit liquide comprenant un récipient à réservoir comprenant une paroi flexible, des moyens de mesure et de distribution agencés sur le récipient et un conduit s'étendant depuis les moyens de mesure et de distribution vers l'intérieur du récipient. Les moyens de mesure et de distribution comprennent une paroi externe et une paroi interne en forme de coupelle espacée de la paroi externe de manière à définir un passage de produit entre les parois.

Lorsqu'un utilisateur presse la paroi flexible du récipient, du produit liquide s'écoule depuis le réservoir à l'intérieur du conduit, dans le passage de produit, à travers des orifices ménagés dans la paroi interne et vient remplir la coupelle. Lorsque l'utilisateur relâche la pression, le remplissage de la coupelle cesse, et l'éventuel excès de produit liquide est aspiré par le conduit et retourne vers le réservoir.

Un inconvénient de ce dispositif est qu'il nécessite l'assemblage de moyens de mesure volumineux au-dessus du goulot et récipient.

Les moyens de mesure incluant le conduit central, la paroi externe et la paroi interne entrainent des opérations de montage complexes.

Le document DE 36 18 559 décrit un dispositif pour extraire une quantité mesurée d'un liquide contenu dans un conteneur ayant des parois flexibles. Le dispositif comprend un récipient apte à être inséré dans le goulot du conteneur et une canule débouchant à l'intérieur du récipient et s'étendant jusqu'au fond du conteneur.

Le document DE 24 29 626 décrit un récipient pour liquide avec un dispositif de dosage. Le dispositif de dosage est inséré dans une ouverture du récipient et comprend une coupelle et un conduit tubulaire reliant la coupelle au fond du récipient.

Le document EP 0 060 060 décrit un récipient distributeur comprenant une bouteille formée en une seule pièce de matière avec un conduit et un réceptacle, et un composant de dosage inséré dans le réceptacle.

Le document EP 0010965 décrit également un récipient distributeur comprenant une bouteille formée en une seule pièce de matière avec un conduit et un réceptacle de dosage.

### RESUME DE L'INVENTION

Un but de l'invention est de proposer un dispositif doseur permettant de limiter l'encombrement des moyens de dosage au-dessus du récipient.

Ce problème est résolu dans le cadre de la présente invention par un dispositif doseur comprenant :
- un récipient comprenant une cavité principale apte à contenir un produit, un goulot pour le remplissage de la cavité principale avec le produit et un conduit d'amenée de produit, et
- un élément obturateur adapté pour être inséré dans le goulot de manière à obturer la cavité principale, l'élément obturateur formant une cavité de dosage adaptée pour contenir une dose prédéterminée de produit,
   dans lequel lorsque l'élément obturateur est inséré dans le goulot, la cavité de dosage s'étend au moins en partie dans la cavité principale et le conduit d'amenée de produit autorise une circulation du produit entre la cavité principale et la cavité de dosage.

Comme l'élément obturateur est inséré dans le goulot du récipient et s'étend au moins en partie dans la cavité principale, il est possible de concevoir un dispositif doseur présentant un goulot de faible hauteur.

En particulier, il est possible de concevoir un dispositif doseur dans lequel le récipient présente un goulot dont l'apparence est sensiblement identique à un récipient traditionnel.

Le dispositif peut en outre présenter les caractéristiques suivantes :
- l'élément obturateur comprend une paroi présentant une surface interne délimitant la cavité de dosage et une surface externe présentant des moyens d'étanchéité coopérant avec une surface interne du goulot pour obturer la cavité principale,
- lorsque le récipient est dans une position de repos, la cavité de dosage s'étend au-dessus et au-dessous des moyens d'étanchéité,
- les moyens d'étanchéité comprennent une gorge adaptée pour recevoir un bourrelet agencé sur la surface interne du goulot,
- les moyens d'étanchéité comprennent des ailettes aptes à venir en appui contre une surface interne du goulot,
- les moyens d'étanchéité comprennent un bourrelet apte à venir en appui contre une surface interne du goulot,
- le récipient comprend un conduit d'amenée de produit autorisant une circulation du produit entre la cavité principale et la cavité de dosage,
- le conduit d'amenée de produit présente une première extrémité débouchant à proximité d'un fond du récipient et une deuxième extrémité débouchant au niveau d'une paroi latérale du goulot,
- l'élément obturateur comprend une paroi présentant une surface interne délimitant la cavité de dosage et au moins une ouverture formée dans la paroi autorisant une pénétration du produit dans la cavité de dosage,
- le positionnement de l'ouverture dans la paroi détermine un volume de la dose maximale de produit,
- le dispositif comprend des moyens d'étanchéité pour raccorder de manière étanche le conduit d'amenée de produit à l'ouverture formée dans la paroi de l'élément obturateur,
- l'élément obturateur comprend une paroi présentant une surface externe délimitant, entre l'élément obturateur et le goulot, un espace intermédiaire dans lequel débouche le conduit d'amenée de produit,
- le dispositif comprend en outre une capsule pour obturer la cavité de dosage, la capsule comprenant des moyens de retenu de l'élément obturateur adaptés pour retenir l'élément obturateur lors de l'insertion de l'élément obturateur dans le goulot du récipient et pour se désolidariser de l'élément obturateur une fois l'élément obturateur inséré dans le goulot,
- les moyens de retenu comprennent une jupe adaptée pour maintenir l'élément obturateur par serrage,
- les moyens de retenu comprennent une zone filetée adaptée pour coopérer avec une zone filetée de l'élément obturateur,
- le récipient comprend une paroi flexible adaptée pour être pressée de manière à entrainer un transfert de produit depuis la cavité principale jusqu'à la cavité de dosage, et pour revenir spontanément dans sa forme initiale de manière à entrainer une aspiration de produit en surplus depuis la cavité de dosage vers la cavité principale,
- l'élément obturateur est en un matériau transparent et présente un marquage permettant à un utilisateur de mesurer une quantité de produit contenue dans la cavité de dosage.

L'invention se rapporte également à un procédé de remplissage et de fermeture d'un dispositif tel que défini précédemment, comprenant des étapes de :
- introduire du produit dans la cavité principale du récipient par une ouverture du goulot,
- insérer l'élément obturateur dans le goulot,
- visser une capsule sur le goulot,
   dans lequel l'étape d'insertion de l'élément obturateur dans le goulot est réalisée simultanément à l'étape de vissage de la capsule, en une seule opération, l'élément obturateur étant fixé sur la capsule grâce à des moyens de retenu.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- les figures 1A et 1B représentent de manière schématique, en coupe, un dispositif doseur conforme à un premier mode de réalisation de l'invention, selon des plans de coupe A-A et B-B,
- la figure 2 représente de manière schématique, en perspective, le dispositif doseur des figures 1A et 1B,
- la figure 3 représente de manière schématique, en perspective, un élément obturateur du dispositif doseur,
- la figure 4 représente de manière schématique, en perspective, une variante de l'élément obturateur,
- les figures 5A à 5D représentent de manière schématique des étapes d'un procédé de remplissage et de fermeture du dispositif doseur,
- les figures 6A à 6E représentent de manière schématique des étapes d'utilisation du dispositif doseur pour le dosage d'un produit liquide,
- la figure 7 représente de manière schématique, en coupe, un dispositif doseur conforme à un deuxième mode de réalisation de l'invention,
- la figure 8 représente de manière schématique, en coupe, un dispositif doseur conforme à un troisième mode de réalisation de l'invention.

### DESCRIPTION DETAILLEE

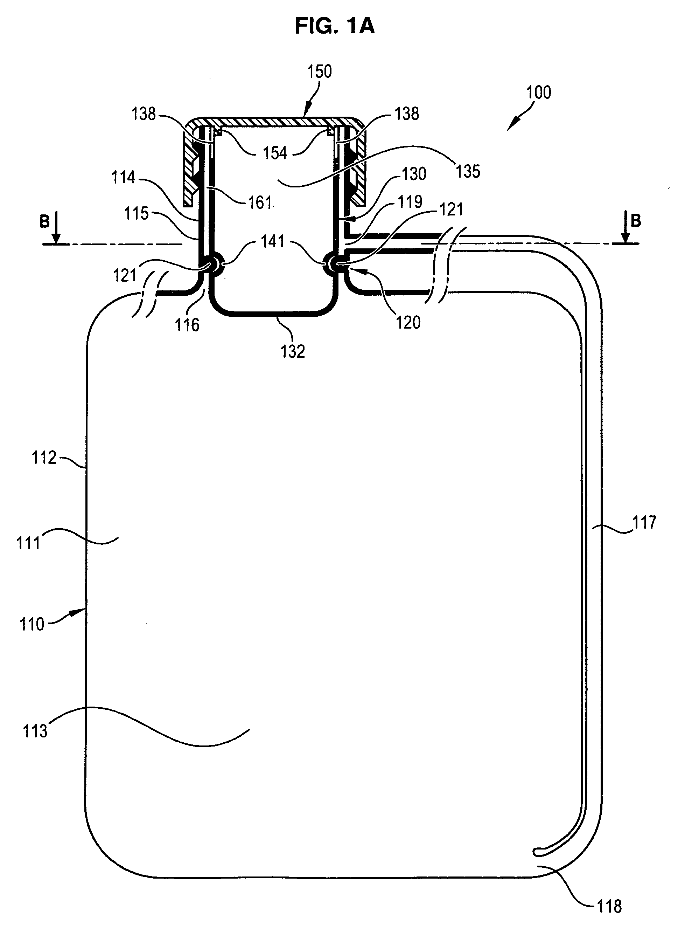

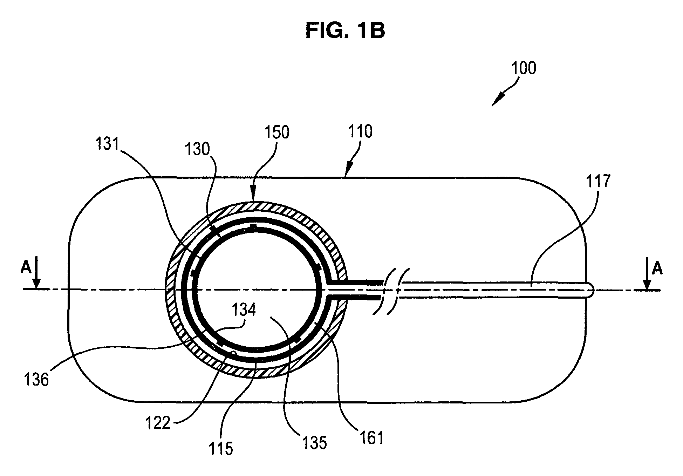

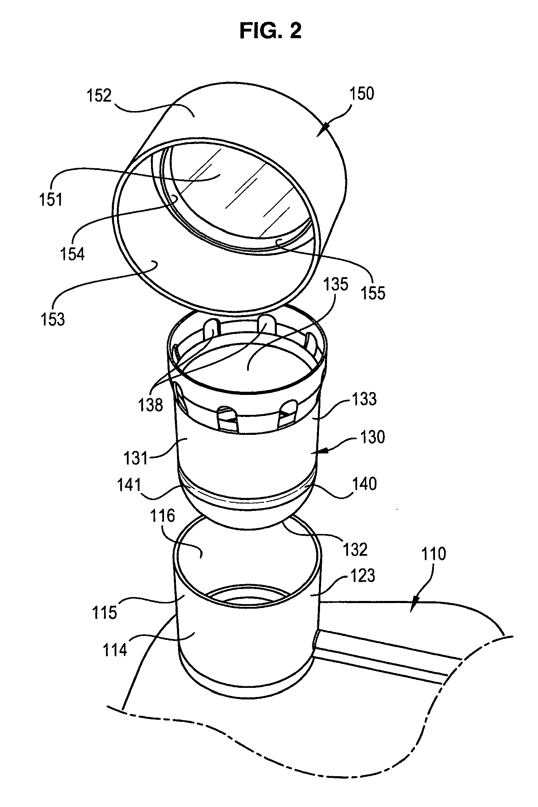

Sur les figures 1A, 1B et 2, le dispositif doseur 100 conforme à un premier mode de réalisation de l'invention comprend un récipient 110, un élément obturateur 130 et une capsule 150.

Le récipient 110 présente par exemple la forme d'une bouteille. Plus précisément, le récipient 110 comprend un corps 111 formé d'une paroi 112 délimitant une cavité interne 113 (ou cavité principale) adaptée pour contenir un produit liquide, et un goulot 114 comprenant une paroi cylindrique 115 et définissant une ouverture 116 pour le remplissage de la cavité principale 113 avec le produit.

Le récipient 110 comprend en outre un conduit 117 d'amenée de produit s'étendant à l'extérieur de la cavité principale 113 le long du corps 111. Le conduit 117 présente une première extrémité 118 (ou extrémité inférieure) débouchant dans la cavité principale 113, à proximité du fond du récipient, et une deuxième extrémité 119 (ou extrémité supérieure) débouchant dans le goulot 114.

Dans ce premier mode de réalisation, la paroi 112 du récipient comprend des moyens d'arrêt 120 sous la forme d'un bourrelet circulaire 121 s'étendant à l'intérieur du goulot 114 en saillie de la surface interne 122 de la paroi 115 du goulot 114.

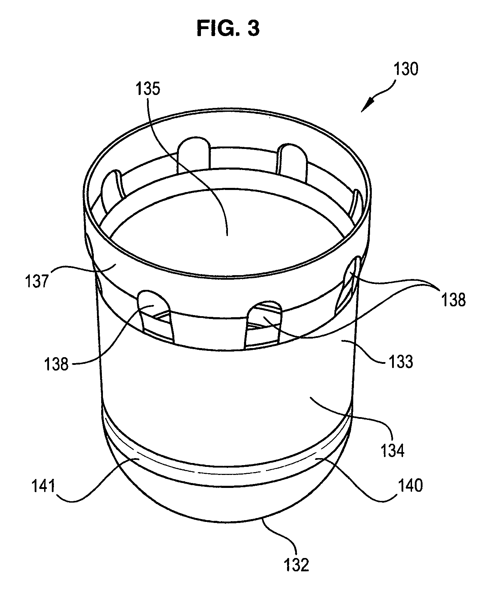

Comme cela est illustré sur la figure 3, l'élément obturateur 130 présente une forme générale de godet et est adapté pour être inséré dans le goulot 114. Plus précisément, l'élément obturateur 130 comprend une paroi 131 présentant une partie inférieure 132 (ou fond) de forme générale hémisphérique et une partie supérieure 133 de forme générale cylindrique de révolution. La paroi 131 présente une surface interne 134 délimitant une cavité de dosage 135 (ou cavité secondaire) et une surface externe 136. La paroi 131 de l'élément obturateur 130 comprend des moyens d'arrêt 140 sous la forme d'une gorge circulaire 141 formée à partir de la surface externe 134 et adaptée pour recevoir le bourrelet circulaire 121 du récipient 110.

Les moyens d'arrêt 140 forment également des moyens d'étanchéité empêchant à du produit P contenu dans la cavité principale 113 de s'échapper du récipient 110 via l'ouverture 116 du goulot 114.

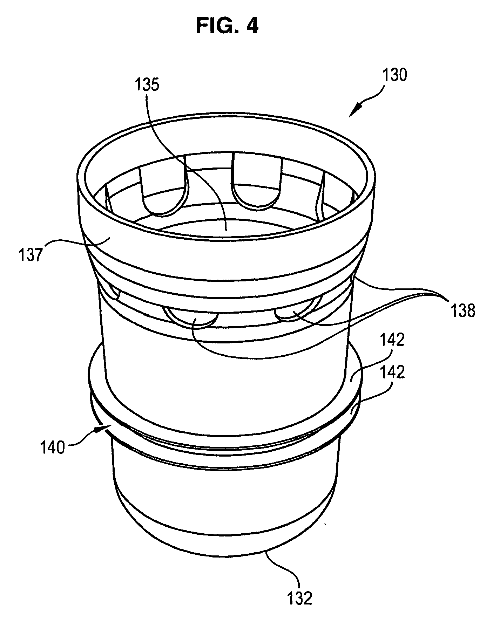

Dans une variante du dispositif, illustrée sur la figure 4, l'élément obturateur 130 peut comprendre, à la place de la gorge circulaire 141, des ailettes 142 radiales venant en appui contre la surface interne 122 du goulot 114. Du fait de leur souplesse, les ailettes 142 épousent la forme de la surface interne 122 du goulot pour procurer une étanchéité par friction.

Sur les figures 3 et 4, la paroi 131 de l'élément obturateur 130 présente dans sa partie supérieure une forme légèrement évasée 137, lui permettant, d'une part, de venir en appui contre la surface interne 122 de la paroi 115 du goulot 114 afin de créer une étanchéité entre le goulot 114 et l'élément obturateur 130, et d'autre part, d'assurer un centrage de l'élément obturateur 130 par rapport au goulot 114.

L'élément obturateur 130 comprend une série d'ouvertures 138 ménagées dans la partie supérieure de la paroi 131 et dont la position par rapport au fond 132 de l'obturateur 130 détermine un volume prédéterminé de la cavité de dosage 135, ce volume correspondant à une dose maximale D de produit.

Comme cela est illustré sur la figure 2, la capsule 150 présente une forme générale cylindrique et est adaptée pour être vissée sur le goulot 114 afin de fermer le dispositif 100 pour le stockage du produit. La capsule 150 comprend un fond 151 en forme générale de disque et une jupe externe 152 cylindrique s'étendant à partir du fond 151. La jupe externe 152 présente sur sa surface interne 153 un filetage adapté pour coopérer avec un filetage prévu sur la surface externe 123 de la paroi 115 du goulot 114.

La capsule 150 comprend également des moyens de retenu 154 pour retenir l'élément obturateur 130 sur la capsule 150. Dans ce premier mode de réalisation, les moyens de retenu 154 comprennent une jupe interne 155 adaptée pour être engagée en force dans l'ouverture de la partie supérieure de l'élément obturateur 130.

Les opérations de remplissage et de fermeture du dispositif 100 sont effectuées de la manière suivante.

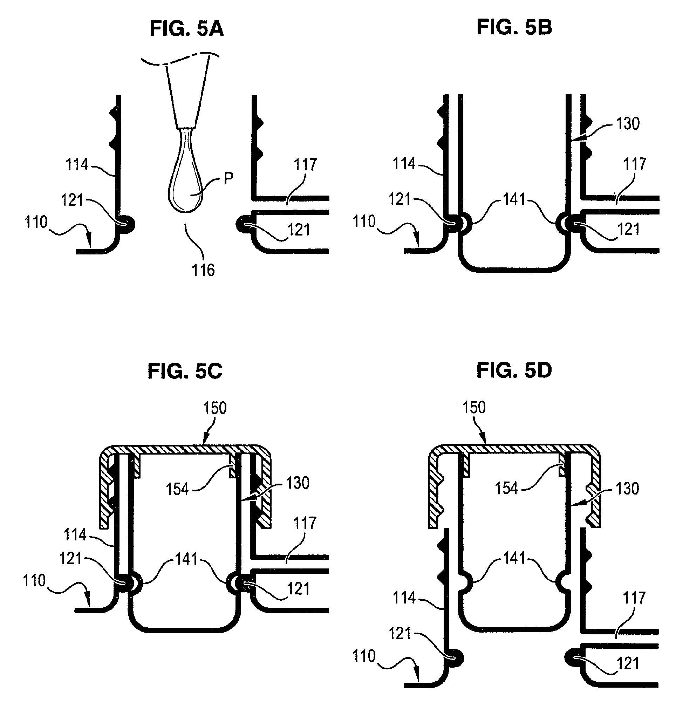

Selon une première étape (figure 5A), du produit P est introduit dans la cavité principale 113 du récipient 110 par l'ouverture 116 du goulot 114.

Selon une deuxième étape (figure 5B), l'élément obturateur 130 est inséré dans le goulot 114 du récipient jusqu'à ce que le bourrelet 121 pénètre dans la gorge 141 pour obturer le récipient 110 de manière étanche. Une fois l'élément obturateur 130 inséré dans le goulot 114, la cavité de dosage 135 s'étend en partie dans la cavité principale 113. Plus précisément, la partie inférieure 132 de la paroi 131 de l'élément obturateur 130 qui sépare la cavité de dosage 135 de la cavité principale 113 est positionnée, sous le goulot 114, à l'intérieur de la cavité principale 113.

Selon une troisième étape (figure 5C), la capsule 150 est vissée sur le goulot 114 afin de fermer le dispositif.

De manière avantageuse, l'étape d'insertion de l'élément obturateur 130 dans le goulot 114 peut être réalisée simultanément à l'étape de vissage de la capsule 150, en une seule opération, comme cela est illustré sur la figure 5D. A cet effet, l'élément obturateur 130 est fixé sur la capsule 150 grâce aux moyens de retenu 154 et la capsule 150 est vissée sur le goulot 114. Le vissage de la capsule 150 sur le goulot 114 entraine simultanément l'insertion de l'élément obturateur 130 dans le goulot 114 jusqu'à l'enclenchement du bourrelet 121 dans la gorge 141.

Comme cela est illustré sur les figures 1A et 1B, lorsque l'élément obturateur 130 est en place dans le goulot 114, la paroi 131 de l'élément obturateur 130 s'étend à distance de la paroi 115 du goulot 114, délimitant ainsi, entre l'élément obturateur et le goulot, un espace intermédiaire 161 dans lequel débouche le conduit 117 d'amenée de produit.

Le dispositif doseur 100 peut être utilisé de la manière suivante.

Le dispositif doseur 100 est d'abord disposé en position de repos : il est par exemple posé sur un support plan horizontal de sorte qu'il se trouve en position sensiblement verticale, goulot vers le haut.

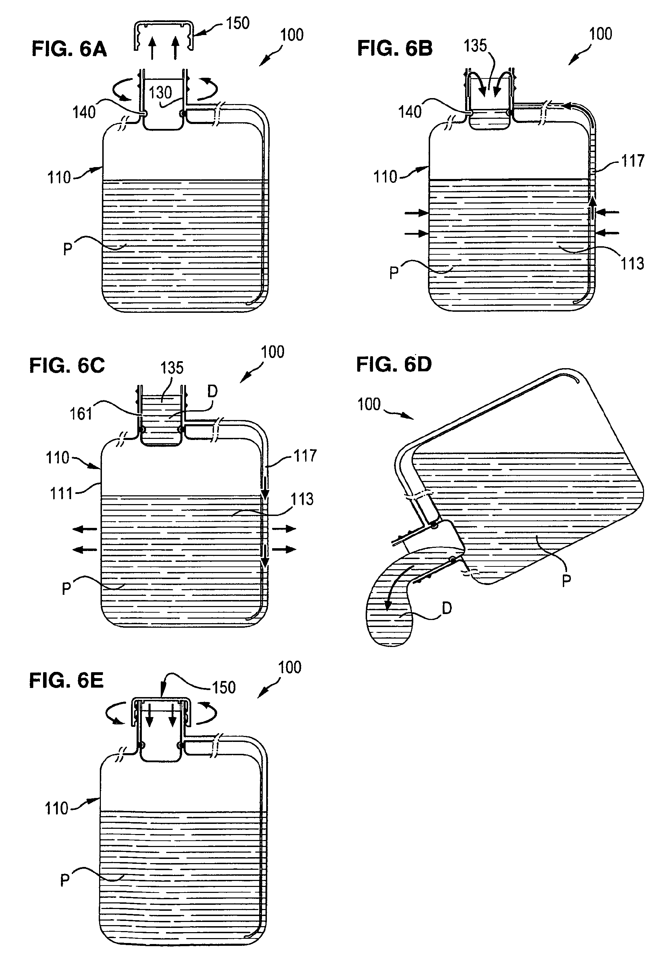

Selon une première étape (figure 6A), l'utilisateur dévisse la capsule 150 afin d'ouvrir le dispositif 100. Lors de cette étape, l'élément obturateur 130 se désolidarise de la capsule 150 du fait que l'élément obturateur est maintenu dans le goulot 114 par les moyens d'arrêt 140.

Selon une deuxième étape (figure 6B), l'utilisateur presse le corps 111 du récipient 110 de manière à générer dans la cavité principale 113 une surpression. La surpression provoque une montée du produit P contenu dans la cavité principale 113 vers le goulot 114 via le conduit 117 d'amenée de produit. Le produit P circule dans le conduit 117 et pénètre dans l'espace intermédiaire 161 entre la paroi 115 du goulot 114 et la paroi 131 de l'élément obturateur 130. Le niveau du produit dans l'espace intermédiaire 161 monte jusqu'à ce que le produit atteigne les ouvertures 138. Puis le produit P se déverse dans la cavité de dosage 135 via les ouvertures 138.

Selon une troisième étape (figure 6C), lorsque la cavité de dosage 135 contient une quantité de produit souhaitée, l'utilisateur peut relâcher la pression sur le corps 111 du récipient 110. Du fait de son élasticité, le corps 111 du récipient 110 reprend spontanément sa forme initiale, ce qui génère une dépression dans la cavité principale 113. La dépression provoque une aspiration du produit P contenu dans l'espace intermédiaire 161 via le conduit 117 d'amenée du produit. Ainsi, le produit P en excès dans la cavité de dosage 135 est aspiré par le conduit 117 jusqu'à ce que le niveau du produit contenu dans la cavité de dosage 135 atteigne les ouvertures 138. Le produit P aspiré retourne dans la cavité principale 113 tandis qu'une dose D de produit de quantité déterminée est formée dans la cavité de dosage 135.

Selon une quatrième étape (figure 6D), l'utilisateur incline le récipient 100 pour déverser la dose D de produit contenue dans la cavité de dosage 135.

Les étapes qui précèdent peuvent être renouvelées en fonction du nombre de doses D de produit à délivrer.

En fin d'utilisation, le dispositif 100 peut être refermé avec la capsule 150 afin de stocker le produit P en vue d'une prochaine utilisation (figure 6E).

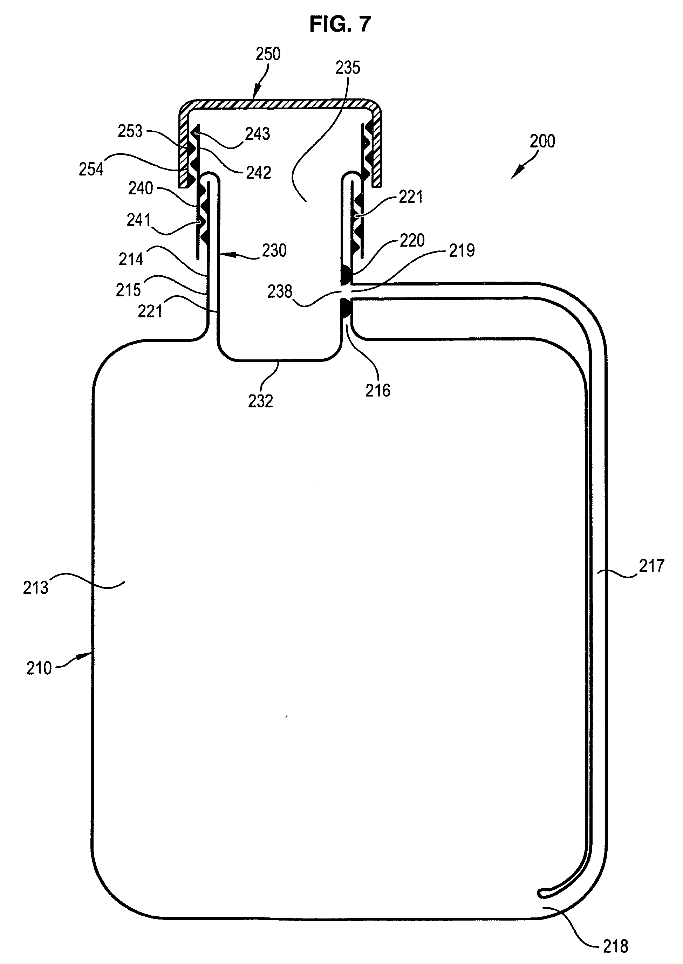

La figure 7 représente de manière schématique un dispositif doseur 200 conforme à un deuxième mode de réalisation de l'invention.

Le dispositif doseur 200 comprend un récipient 210, un élément obturateur 230 et une capsule 250.

Dans ce deuxième mode de réalisation, l'élément obturateur 230 comprend des moyens d'étanchéité 240 empêchant à du produit P contenu dans la cavité principale 213 de s'échapper du récipient 210 via l'ouverture 216 du goulot 214. Les moyens d'étanchéité 240 comprennent une première portion 241 de surface filetée adaptée pour coopérer avec une portion 221 de surface filetée du goulot 214. L'élément obturateur 230 comprend également des moyens de retenu 242 adaptés pour coopérer avec des moyens de retenu 253 de la capsule 250. Les moyens de retenu 242 de l'élément obturateur 230 comprennent une deuxième portion 243 de surface filetée et les moyens de retenu 253 de la capsule 250 comprennent une portion de surface filetée 254, les portions de surface filetées 243 et 254 étant adaptée pour coopérer entre elles pour fixer l'élément obturateur 230 sur la capsule 250.

Les moyens d'étanchéité 240 forment également des moyens d'arrêt.

Le dispositif 200 peut également comprendre des moyens de verrouillage (non représentés) permettant de bloquer l'élément obturateur 130 dans le goulot 114. Les moyens de verrouillage empêchent le retrait de l'élément obturateur 130 du goulot 114 par dévissage, une fois l'élément obturateur 130 en place dans le goulot 114.

En outre, l'élément obturateur 230 comprend une ouverture 238, qui lorsque l'élément obturateur 230 est vissé sur le goulot 214, s'étend en regard de l'extrémité supérieure 219 du conduit 217 d'amenée de produit.

L'élément obturateur 230 comprend un joint d'étanchéité 220 agencé autour de l'ouverture 238, permettant de raccorder de manière étanche le conduit 217 et l'ouverture 238, de sorte qu'en utilisation, le produit circulant dans le conduit 217 alimente la cavité de dosage 235. Le joint d'étanchéité 220 peut être réalisé en un matériau souple, différent du matériau formant la paroi 231 de l'élément obturateur 230, par exemple par un procédé de bi-injection.

Dans ce deuxième mode de réalisation, le positionnement de l'ouverture 238 par rapport au fond 232 de l'élément obturateur 230 détermine un volume prédéterminé de la cavité de dosage 235, ce volume correspondant à une dose maximale D de produit.

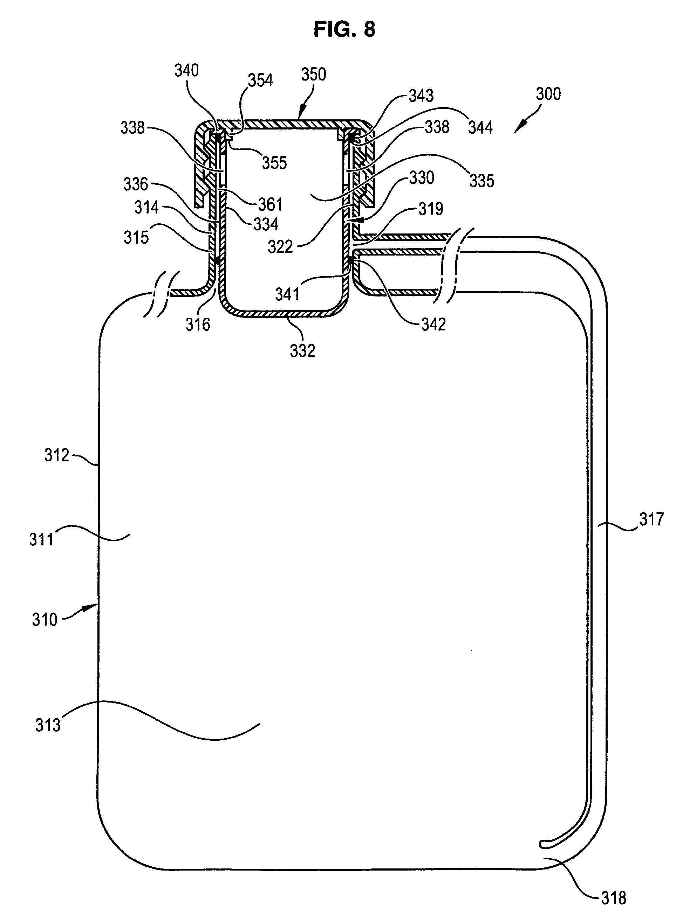

La figure 8 représente de manière schématique un dispositif doseur 300 conforme à un troisième mode de réalisation de l'invention.

Le dispositif doseur 300 comprend un récipient 310, un élément obturateur 330 et une capsule 350.

Dans ce troisième mode de réalisation, l'élément obturateur 330 comprend des premiers moyens d'étanchéité 341 empêchant à du produit P contenu dans la cavité principale 313 de s'échapper du récipient 310 via l'ouverture 316 du goulot 314. Les premiers moyens d'étanchéité 341 comprennent un joint d'étanchéité sous la forme d'un bourrelet 342 adapté pour venir en appui contre la surface interne 322 du goulot 314 en étant comprimé.

L'élément obturateur 330 comprend également des deuxièmes moyens d'étanchéité 343 empêchant du produit contenu dans l'espace intermédiaire 361 dans lequel débouche le conduit 317 de s'échapper par le goulot 314. Les deuxièmes moyens d'étanchéité 343 comprennent un joint d'étanchéité sous la forme d'un bourrelet 344 adapté pour venir en appui contre la surface interne 322 du goulot 314 en étant comprimé.

L'espace intermédiaire 361 est donc délimité par les deux bourrelets 341 et 343 venant s'appliquer contre la paroi 315 du goulot 314 respectivement en partie inférieure et en partie supérieure du goulot.

Les bourrelets 342 et 344 peuvent être réalisés en un matériau souple, différent du matériau formant la paroi 231 de l'élément obturateur 230, par exemple par un procédé de bi-injection.

De plus, l'élément obturateur 230 comprend des moyens d'arrêt 340 sous la forme d'un rebord s'étendant transversalement à la paroi 231 et adapté pour venir en appui sur un rebord du goulot 314. Les moyens d'arrêt 340 permettent un positionnement correct de l'élément obturateur 230 dans le goulot 314 lors de l'étape d'insertion de l'élément obturateur 230 dans le goulot 314.

Dans ce troisième mode de réalisation, l'élément obturateur 330 comprend une série d'ouvertures 338 ménagées dans la partie supérieure de la paroi 331. Les ouvertures 338 permettent une circulation du produit entre l'espace intermédiaire 361 et la cavité de dosage 335. La position des ouvertures 338 par rapport au fond 332 de l'obturateur 330 détermine un volume prédéterminé de la cavité de dosage 335, ce volume correspondant à une dose maximale D de produit.

Comme dans le premier mode de réalisation, la capsule 350 comprend des moyens de retenu 354 pour retenir l'élément obturateur 330 sur la capsule 350. Les moyens de retenu 354 comprennent une jupe interne 355 adaptée pour être engagée en force dans l'ouverture de la partie supérieure de l'élément obturateur 330.

Les moyens de retenu 354 permettent de fixer l'élément obturateur 330 sur la capsule 350 pendant que la capsule 350 est vissée sur le goulot 314. Le vissage de la capsule 350 sur le goulot 314 entraine simultanément l'insertion de l'élément obturateur 330 dans le goulot 314 jusqu'à ce que les moyens d'arrêt viennent en butée contre le rebord du goulot 314. Une fois l'élément obturateur 330 inséré dans le goulot 314, l'élément obturateur est maintenu en place dans le goulot par les bourrelets 342, 344.

Dans chacun des trois modes de réalisation qui viennent d'être décrits, l'élément obturateur est configuré de sorte que lorsqu'il est inséré dans le goulot, la cavité de dosage s'étend au moins en partie dans la cavité principale.

De cette manière, il est possible de réaliser un dispositif doseur présentant un goulot de faible hauteur.

En outre, le conduit d'amenée de produit s'étend le long du corps du récipient et débouche dans une paroi latérale du goulot. Ce conduit peut ainsi être moulé directement avec le récipient et ne nécessite pas une opération d'assemblage spécifique. Du fait de l'agencement particulier de l'élément obturateur dans le goulot, le conduit peut déboucher à une faible hauteur dans le goulot.

Dans chacun des trois modes de réalisation qui viennent d'être décrits, l'élément obturateur 130, 230, 330 peut être fabriqué en un matériau transparent et présenter un marquage, tel qu'une graduation par exemple, permettant à l'utilisateur de mesurer la quantité de produit P contenue dans la cavité de dosage 135, 235, 335. De plus, le récipient 110, 210, 310 peut également être fabriqué intégralement en un matériau transparent ou comprendre une zone transparente, telle qu'une bande de visibilité par exemple, permettant à l'utilisateur de visualiser le niveau du produit P dans la cavité de dosage. Ces caractéristiques permettent d'obtenir un dispositif « multi-doses », c'est-à-dire permettant de délivrer une dose de produit de quantité souhaitée.

## Revendications

1. Dispositif doseur (100, 200, 300) comprenant :
- un récipient (110, 210, 310) comprenant une cavité principale (113, 213, 313) apte à contenir un produit, et un goulot (114, 214, 314) pour le remplissage de la cavité principale (113, 213, 313) avec le produit, et
- un élément obturateur (130, 230, 330) adapté pour être inséré dans le goulot (114, 214, 314) de manière à obturer la cavité principale (113, 213, 313), l'élément obturateur (130, 230, 330) formant une cavité de dosage (135, 235, 335) adaptée pour contenir une dose maximale prédéterminée de produit,
dans lequel lorsque l'élément obturateur (130, 230, 330) est inséré dans le goulot (114, 214, 314), la cavité de dosage (135, 235, 335) s'étend au moins en partie dans la cavité principale (113, 213, 313),
**caractérisé en ce que** le récipient (110, 210, 310) comprend également un conduit d'amenée de produit (117, 217, 317) qui, lorsque l'élément obturateur (130, 230, 330) est inséré dans le goulot (114, 214, 314), autorise une circulation du produit entre la cavité principale (113, 213, 313) et la cavité de dosage (135, 235, 335).

2. Dispositif selon la revendication 1, dans lequel l'élément obturateur (130, 330) comprend une paroi (131, 331) présentant une surface interne (134, 334) délimitant la cavité de dosage (135, 335) et une surface externe (136, 336) présentant des moyens d'étanchéité (141,142, 341) coopérant avec une surface interne (122, 322) du goulot (114, 314) pour obturer la cavité principale (113, 313).

3. Dispositif selon la revendication 2, dans lequel, lorsque le récipient (110, 310) est dans une position de repos, la cavité de dosage (135, 335) s'étend au-dessus et au-dessous des moyens d'étanchéité (141, 142, 341).

4. Dispositif selon l'une des revendications 2 ou 3, dans lequel les moyens d'étanchéité (141, 121) comprennent une gorge (141) adaptée pour recevoir un bourrelet (121) agencé sur la surface interne (122) du goulot (114).

5. Dispositif selon l'une des revendications 2 ou 3, dans lequel les moyens d'étanchéité (142) comprennent des ailettes (142) aptes à venir en appui contre une surface interne (122) du goulot (114).

6. Dispositif selon l'une des revendications 2 ou 3, dans lequel les moyens d'étanchéité (341) comprennent un bourrelet (342) apte à venir en appui contre une surface interne (322) du goulot (314).

7. Dispositif selon l'une des revendications 1 à 6, dans lequel le conduit d'amenée de produit (117, 217, 317) présente une première extrémité (118, 218, 318) débouchant à proximité d'un fond du récipient (110, 210, 310) et une deuxième extrémité (119, 219, 319) débouchant au niveau d'une paroi latérale (115, 215, 315) du goulot (114, 214, 314).

8. Dispositif selon l'une des revendications 1 à 7, dans lequel l'élément obturateur (130, 230, 330) comprend une paroi (131, 231, 331) présentant une surface interne (134, 234, 334) délimitant la cavité de dosage (135, 235, 335) et au moins une ouverture (138, 238, 338) formée dans la paroi (131, 231, 331) autorisant une pénétration du produit dans la cavité de dosage (135, 235, 335).

9. Dispositif selon la revendication 8, dans lequel le positionnement de l'ouverture (138, 238, 338) dans la paroi (131, 231, 331) détermine un volume de la dose maximale de produit.

10. Dispositif selon l'une des revendications 8 ou 9, comprenant des moyens d'étanchéité (220) pour raccorder de manière étanche le conduit d'amenée de produit (217) à l'ouverture (238) formée dans la paroi (231) de l'élément obturateur (230).

11. Dispositif selon l'une des revendications 1 à 10, dans lequel l'élément obturateur (130, 330) comprend une paroi (131, 331) présentant une surface externe (136, 336) délimitant, entre l'élément obturateur (130, 330) et le goulot (114, 314), un espace intermédiaire (161, 361) dans lequel débouche le conduit d'amenée de produit (117, 317).

12. Dispositif selon l'une des revendications qui précèdent, comprenant en outre une capsule (150, 250, 350) pour obturer la cavité de dosage (135, 235, 335), la capsule (150, 250, 350) comprenant des moyens de retenu (154, 253, 354) de l'élément obturateur (130, 230, 330) adaptés pour retenir l'élément obturateur lors de l'insertion de l'élément obturateur dans le goulot (115, 215, 315) du récipient (110, 210, 310) et pour se désolidariser de l'élément obturateur (130, 230, 330) une fois l'élément obturateur inséré dans le goulot.

13. Dispositif selon la revendication 12, dans lequel les moyens de retenu (154, 354) comprennent une jupe (155, 355) adaptée pour maintenir l'élément obturateur (130, 330) par serrage.

14. Dispositif selon la revendication 12, dans lequel les moyens de retenu (253) comprennent une zone filetée (254) adaptée pour coopérer avec une zone filetée (243) de l'élément obturateur (230).

15. Dispositif selon l'une des revendications qui précèdent, dans lequel le récipient (110, 210, 310) comprend une paroi (112, 212, 312) flexible adaptée pour être pressée de manière à entrainer un transfert de produit depuis la cavité principale (113, 213, 313) jusqu'à la cavité de dosage (135, 235, 335), et pour revenir spontanément dans sa forme initiale de manière à entrainer une aspiration de produit en surplus depuis la cavité de dosage (135, 235, 335) vers la cavité principale (113, 213, 313).

16. Dispositif selon l'une des revendications 1 à 15, dans lequel l'élément obturateur (130, 230, 330) est en un matériau transparent et présente un marquage permettant à un utilisateur de mesurer une quantité de produit (P) contenue dans la cavité de dosage (135, 235, 335).

17. Procédé de remplissage et de fermeture d'un dispositif conforme à l'une des revendications 1 à 16, comprenant des étapes de :
- introduire du produit (P) dans la cavité principale (113) du récipient (110) par une ouverture (116) du goulot (114),
- insérer l'élément obturateur (130) dans le goulot (114),
- visser une capsule (150) sur le goulot (114),
dans lequel l'étape d'insertion de l'élément obturateur (130) dans le goulot (114) est réalisée simultanément à l'étape de vissage de la capsule (150), en une seule opération, l'élément obturateur (130) étant fixé sur la capsule (150) grâce à des moyens de retenu (154).

## Patentansprüche

1. Dosiervorrichtung (100, 200, 300), aufweisend:
- einen Behälter (110, 210, 310) mit einem Haupthohlraum (113, 213, 313), der angepasst ist, ein Produkt zu enthalten, und mit einem Halsabschnitt (114, 214, 314) zur Befüllung des Haupthohlraums (113, 213, 313) mit dem Produkt, und
- ein Verschlusselement (130, 230, 330), das angepasst ist, in den Halsabschnitt (114, 214, 314) derart eingesetzt zu werden, dass der Haupthohlraum (113, 213, 313) verschlossen ist, wobei das Verschlusselement (130, 230, 330) einen Dosierungshohlraum (135, 235, 335) ausbildet, der angepasst ist, eine vorbestimmte maximale Produktdosis zu enthalten,
wobei sich bei Einsatz des Verschlusselements (130, 230, 330) in den Halsabschnitt (114, 214, 314) der Dosierungshohlraum (135, 235, 335) zumindest teilweise in den Haupthohlraum (113, 213, 313) erstreckt,
**dadurch gekennzeichnet, dass** der Behälter (110, 210, 310) weiterhin einen Produktzuführungskanal (117, 217, 317) aufweist, welcher bei Einsatz des Verschlusselements (130, 230, 330) in den Halsabschnitt (114, 214, 314) eine Zirkulation des Produkts zwischen dem Haupthohlraum (113, 213, 313) und dem Dosierungshohlraum (135, 235, 335) zulässt.

2. Vorrichtung gemäß Anspruch 1, wobei das Verschlusselement (130, 330) eine Wand (131, 331) mit einer Innenfläche (134, 334), welche den Dosierungshohlraum (135, 335) begrenzt, und mit einer Außenfläche (136, 336) mit Dichtungsmitteln (141, 142, 341), die mit einer Innenfläche (122, 322) des Halsabschnittes (114, 314) zusammenwirken, um den Haupthohlraum (113, 313) zu verschließen, aufweist.

3. Vorrichtung gemäß Anspruch 2, wobei sich der Dosierungshohlraum (135, 335), wenn der Behälter (110, 310) in einer Ruheposition ist, oberhalb und unterhalb von den Dichtungsmitteln (141, 142, 341) erstreckt.

4. Vorrichtung gemäß einem der Ansprüche 2 oder 3, wobei die Dichtungsmittel (141, 121) eine Einschnürung (141) aufweisen, die angepasst ist, einen Dichtwulst (121) aufzunehmen, der an der Innenfläche (122) des Halsabschnitts (114) eingerichtet ist.

5. Vorrichtung gemäß einem der Ansprüche 2 oder 3, wobei die Dichtungsmittel (142) Flügel (142) aufweisen, die eingerichtet sind, mit einer Innenfläche (122) des Halsabschnitts (114) in Anlage zu gelangen.

6. Vorrichtung gemäß einem der Ansprüche 2 oder 3, wobei die Dichtungsmittel (341) eine Dichtwulst (342) aufweisen, die eingerichtet ist, mit einer Innenfläche (322) des Halsabschnittes (314) in Anlage zu gelangen.

7. Vorrichtung gemäß einem der Ansprüche 1 bis 6, wobei der Produktzuführungskanal (117, 217, 317) ein erstes Ende (118, 218, 318), das nahe eines Bodens des Behälters (110, 210, 310) einmündet, und ein zweites Ende (119, 219, 319), das in der Höhe von einer seitlichen Wand (115, 215, 315) des Halsabschnittes (114, 214, 314) einmündet, aufweist.

8. Vorrichtung gemäß einem der Ansprüche 1 bis 7, wobei das Verschlusselement (130, 230, 330) eine Wand (131, 231, 331) mit einer Innenfläche (134, 234, 334), die den Dosierungshohlraum (135, 235, 335) begrenzt, und zumindest eine Öffnung (138, 238, 338), die in der Wand (131, 231, 331) ausgebildet ist, aufweist, um ein Durchdringen des Produkts in den Dosierungshohlraum (135, 235, 335) zuzulassen.

9. Vorrichtung gemäß Anspruch 8, wobei die Positionierung der Öffnung (138, 238, 338) in der Wand (131, 231, 331) ein Volumen der maximalen Produktdosis bestimmt.

10. Vorrichtung gemäß einem der Ansprüche 8 oder 9, aufweisend Dichtungsmittel (220) zum wasserdichten Anschließen des Produktzuführungskanals (217) an die Öffnung (238), die in der Wand (231) des Verschlusselements (230) ausgebildet ist.

11. Vorrichtung gemäß einem der Ansprüche 1 bis 10, wobei das Verschlusselement (130, 330) eine Wand (131, 331) mit einer Außenfläche (136, 336) aufweist, die zwischen dem Verschlusselement (130, 330) und dem Halsabschnitt (114, 314) einen Zwischenraum (161, 361) begrenzt, in welchen der Produktzuführungskanal (117, 317) mündet.

12. Vorrichtung gemäß einem der vorangehenden Ansprüche, aufweisend weiterhin eine Kappe (150, 250, 350) zum Verschließen des Dosierungshohlraums (135, 235, 335), wobei die Kappe (150, 250, 350) Halterungsmittel (154, 253, 354) zur Halterung des Verschlusselements (130, 230, 330) aufweist, die eingerichtet sind, das Verschlusselement bei Einsatz des Verschlusselements in den Halsabschnitt (115, 215, 315) des Behälters (110, 210, 310) zu halten und sich von dem Verschlusselement (130, 230, 330) zu entkoppeln, wenn das Verschlusselement in den Halsabschnitt eingesetzt ist.

13. Vorrichtung gemäß Anspruch 12, wobei die Halterungsmittel (154, 354) einen Rock (155, 355) aufweisen, der eingerichtet ist, das Verschlusselement (130, 330) in Klemmung zu halten.

14. Vorrichtung gemäß Anspruch 12, wobei die Halterungsmittel (253) einen Gewindebereich (254) aufweisen, der eingerichtet ist, mit einem Gewindebereich (243) des Verschlusselements (230) zusammenzuwirken.

15. Vorrichtung gemäß einem der vorangehenden Ansprüche, wobei der Behälter (110, 210, 310) eine flexible Wand (112, 212, 312) aufweist, die eingerichtet ist, so gedrückt zu werden, dass eine Übertragung des Produkts von dem Haupthohlraum (113, 213, 313) bis zu dem Dosierungshohlraum (135, 235, 335) bewirkt wird, und seine Ursprungsgestalt spontan so wieder zu erlangen, dass eine Ansaugung des überschüssigen Produkts von dem Dosierungshohlraum (135, 235, 335) in Richtung des Haupthohlraums (113, 213, 313) verursacht wird.

16. Vorrichtung gemäß einem der Ansprüche 1 bis 15, wobei das Verschlusselement (130, 230, 330) aus einem transparenten Material gebildet ist und eine Kennzeichnung aufweist, die es einem Verwender ermöglicht, eine Quantität des Produkts (P) zu messen, das in dem Dosierungshohlraum (135, 235, 335) enthalten ist.

17. Verfahren zur Befüllung und zum Verschließen einer Vorrichtung gemäß einem der Ansprüche 1 bis 16, mit den folgenden Schritten:
- Einführen des Produkts (P) in den Haupthohlraum (113) des Behälters (110) über eine Öffnung (116) des Halsabschnittes (114),
- Einsetzen des Verschlusselements (130) in den Halsabschnitt (114),
- Verschrauben einer Kappe (150) mit dem Halsabschnitt (114),
wobei der Schritt des Einsetzens des Verschlusselements (130) in den Halsabschnitt (114) gleichzeitig mit dem Schritt des Verschraubens der Kappe (150) bei einem einzigen Vorgang umgesetzt wird, wobei das Verschlusselement (130) an die Kappe (150) mittels der Halterungsmittel (154) fixiert ist.

## Claims

1. Metering device (100, 200, 300) comprising:
- a container (110, 210, 310) comprising a main cavity (113, 213, 313) suitable for containing a product, and a neck (114, 214, 314) for filling the main cavity (113, 213, 313) with the product, and
- a closure element (130, 230, 330) suitable for being inserted into the neck (114, 214, 314) so as to close the main cavity (113, 213, 313), the closure element (130, 230, 330) forming a metering cavity (135, 235, 335) suitable for containing a predetermined maximum dose of product,
wherein, when the closure element (130, 230, 330) is inserted into the neck (114, 214, 314), the metering cavity (135, 235, 335) extends at least partly into the main cavity (113, 213, 313),
**characterised in that** the container (110, 210, 310) also comprises a product feed conduit (117, 217, 317) which, when the closure element (130, 230, 330) is inserted into the neck (114, 214, 314), allows circulation of the product between the main cavity (113, 213, 313) and the metering cavity (135, 235, 335).

2. Device according to claim 1, wherein the closure element (130, 330) comprises a wall (131, 331) having an inner surface (134, 334) defining the metering cavity (135, 335) and an outer surface (136, 336) having sealing means (141, 142, 341) engaging with an inner surface (122, 322) of the neck (114, 314) to seal the main cavity (113, 313).

3. Device according to claim 2, wherein, when the container (110, 310) is in an idle position, the metering cavity (135, 335) extends above and below the sealing means (141, 142, 341).

4. Device according to any of claims 2 or 3, wherein the sealing means (141, 121) comprises a recess (141) suitable for receiving a flange (121) arranged on the inner surface (122) of the neck (114).

5. Device according to any of claims 2 or 3, wherein the sealing means (142) comprise fins (142) suitable for bearing against an inner surface (122) of the neck (114).

6. Device according to any of claims 2 or 3, wherein the sealing means (341) comprise a flange (342) suitable for bearing against an inner surface (322) of the neck (314).

7. Device according to any of claims 1 to 6, wherein the product feed conduit (117, 217, 317) has a first end (118, 218, 318) opening in the vicinity of a base of the receptacle (110, 210, 310) and a second end (119, 219, 319) opening at a side wall (115, 215, 315) of the neck (114, 214, 314).

8. Device according to any of claims 1 to 7, wherein the closure element (130, 230, 330) comprises a wall (131, 231, 331) having an inner surface (134, 234, 334) defining the metering cavity (135, 235, 335) and at least one opening (138, 238, 338) formed in the wall (131, 231, 331) allowing product to enter the metering cavity (135, 235, 335).

9. Device according to claim 8, wherein the positioning of the opening (138, 238, 338) in the wall (131, 231, 331) determines a volume of the maximum product dose.

10. Device according to any of claims 8 or 9, comprising sealing means (220) for tightly connecting the product feed conduit (217) to the opening (238) formed in the wall (231) of the closure element (230).

11. Device according to any of claims 1 to 10, wherein the closure element (130, 330) comprises a wall (131, 331) having an outer surface (136, 336) defining, between the closure element (130, 330) and the neck (114, 314), an intermediate space (161, 361) wherein the product feed conduit (117, 317) opens.

12. Device according to any of the above claims, further comprising a cap (150, 250, 350) for sealing the metering cavity (135, 235, 335), the cap (150, 250, 350) comprising means (154, 253, 354) for retaining the closure element (130, 230, 330) suitable for retaining the closure element when inserting the closure element into the neck (115, 215, 315) of the container (110, 210, 310) and for detaching the closure element (130, 230, 330) once the closure element has been inserted into the neck.

13. Device according to claim 12, wherein the retaining means (154, 354) comprise a skirt (155, 355) suitable for holding the closure element (130, 330) by clamping.

14. Device according to claim 12, wherein the retaining means (253) comprise a threaded zone (254) suitable for engaging with a threaded zone (243) of the closure element (230).

15. Device according to any of the above claims, wherein the container (110, 210, 310) comprises a flexible wall (112, 212, 312) suitable for being pressed so as to induce a transfer of product from the main cavity (113, 213, 313) to the metering cavity (135, 235, 335), and for spontaneously returning to the initial shape thereof so as to induce an intake of excess product from the metering cavity (135, 235, 335) to the main cavity (113, 213, 313).

16. Device according to any of claims 1 to 15, wherein the closure element (130, 230, 330) is made of a transparent material and has a marking enabling a user to measure a quantity of product (P) contained in the metering cavity (135, 235, 335).

17. Process for filling and sealing a device according to any of claims 1 to 16, comprising the following steps:
- introducing product (P) into the main cavity (113) of the container (110) via an opening (116) of the neck (114),
- inserting the closure element (130) into the neck (114),
- screwing a cap (150) onto the neck (114),
wherein the step for inserting the closure element (130) into the neck (114) is carried out simultaneously with the step for screwing the cap (150), in a single operation, the closure element (130) being secured onto the cap (150) using retaining means (154).
